# EUROPEAN PATENT APPLICATION

(11) **EP 3 255 474 A1**
(43) Date of publication of application: **13.12.2017**
(21) Application number: 15881142.2
(22) Date of filing: 17.07.2015
(51) Int. Cl.: G02B 17/08, G02B 21/00

(54) **OBSERVATION DEVICE**

(30) Priority: 05.02.2015 JP 2015021165; 17.06.2015 JP 2015121630
(71) Applicant: Mejiro 67 Inc., Tokyo 171-0031 (JP)
(72) Inventor: UEHARA, Makoto, Tokyo 171-0031 (JP)
(74) Representative: Richardt Patentanwälte PartG mbB
(86) International application number: PCT/JP2015/070590
(87) International publication number: WO 2016/125325

(57) **Abstract**

Provided is an observation device capable of observing a subject plane of, for example, roughly 24.6 x 24.6 mm, at a resolution of no more than 10 microns and at a large tilt angle exceeding 45°. The observation device 10 includes a light receiving surface 20 and an imaging optical system 30 for forming an image of light from a subject plane S onto the light receiving surface 20. The imaging optical system 30 includes a concave primary mirror 32, a secondary mirror 34, and a flat extraction mirror 36. The beam of the light from the subject plane S is reflected at the concave primary mirror 32, the convex secondary mirror 34, and the concave primary mirror 32 in the named order, after which an image of the beam is formed on the light receiving surface 20 via the flat extraction mirror 36. The observation device 10 includes first tilting means capable of changing an angle α defined between an optical axis L1 of light directed toward the concave primary mirror 32 from the subject plane S and a perpendicular line N1 to the subject plane S, and second tilting means capable of changing an angle β defined between an optical axis L2 of light directed toward the light receiving surface 20 from the flat extraction mirror 36 and a perpendicular line N2 to the light receiving surface 20.

## Description

### TECHNICAL FIELD

The present invention relates to an observation device.

### BACKGROUND ART

For example, there is a demand to observe not only the two-dimensional shape of a printed circuit board surface but also the three-dimensional shape of the printed circuit board surface for defect inspection of the printed circuit board. That is, there is a demand to observe the height (= height in the Z-axial direction) of the irregular shape of the surface of a printed circuit board while observing the two-dimensional shape (XY plane shape) of the surface of the printed circuit board.

It is possible to measure the two-dimensional shape of the surface of the printed circuit board by observing the surface of the printed circuit board from directly above. In order to obtain information on the height in the Z-axial direction, however, it is necessary to obliquely observe the irregular shape of the board surface. For example, when observing the board surface obliquely, the width of the front side of the image to be observed becomes wider and the width of the back side becomes narrower. Here, when the center of the image to be observed is set in focus, the front side and the back side are out of focus, so that a clear image may not be obtained for areas other than the center. The fact that the front side and the back side are out of focus is due to the fact that in the ordinary optical system the image plane and the subject plane are arranged perpendicular to the optical axis. In order to focus on the entire surface including the front side and the back side, it is necessary that the image plane should be tilted with respect to the optical axis and the image plane and the subject plane should satisfy the Scheimpflug conditions. Further, in order to observe the front side and the back side with the same width, it is necessary to use an optical system that sets both the object side and the image side telecentric to each other.

The present inventor has already proposed an invention of a measuring device capable of measuring a subject plane from an oblique direction (refer to Patent Document 1). This measuring device utilizes an equimagnification reflective imaging optical system.

### CITATION LIST

### Patent Literature

Patent Literature 1: Japanese Unexamined Patent Application Publication No. 2013-174844

Utilizing the Scheimpflug principle makes it possible to form the image of the entire surface of the subject plane obliquely observed on the light receiving surface. Most of conventional optical observation devices utilizing the Scheimpflug principle use a refractive lens system. The performance of the conventional optical observation devices using a refractive lens system is given in, for example, the following Table 1.

**[Table 1]**

| light receiving surface | light receiving element | magnifying power | subject plane | light receiving element /magnifying power | aberration allowance tilt angle |
|---|---|---|---|---|---|
| 24.6x18.5 mm | 5*µ*mx5*µ*m | 1x | 24.6x18.5 mm | 5*µ* mx5*µ*m | N/A |
| | | 1/2x | 59.6x37 mm | 10*µ*mx10*µ*m | 30° |
| | | 1/3x | 73.8x55.5 mm | 15*µ*mx15*µ*m | 45° |

As shown in Table 1, there is not any optical observation device capable of observing the subject plane obliquely at a large tilt angle exceeding 45° and a resolution of 10 microns or less.

Further, the use of the refractive lens system as the imaging optical system of the observation device raises a problem that the wavelength band of light that may pass through a glass material used for the refractive lens is limited. This leads to a problem that it becomes difficult to apply the observation device to the semiconductor field and the bio field.

### DISCLOSURE OF THE INVENTION

### Problem to be Solved by the Invention

An objective of the invention is to provide an observation device capable of observing, for example, a subject plane of about 24.6 x 24.6 mm with a resolution of 10 microns or less and a large tilt angle exceeding 45°. Another objective of the present invention is to provide an observation device that does not limit the wavelength of light used for observing the subject plane.

### Means for Solving the Problem

The following are means of the invention for solving the above problems.
(1) An observation device including a light receiving surface that receives light from a subject plane, and an imaging optical system that forms an image of the light from the subject plane on the light receiving surface, wherein
   the imaging optical system is constituted by an equimagnification reflective imaging optical system that includes a concave primary mirror, a convex secondary mirror, and a flat extraction mirror, and is capable of reflecting a beam of the light from the subject plane at the concave primary mirror, the convex secondary mirror, and the concave primary mirror in a named order, and then forming an image on the light receiving surface via the flat extraction mirror,
   the observation device including:
   first tilting means capable of changing an angle α defined between an optical axis of light directed toward the concave primary mirror from the subject plane and a perpendicular line to the subject plane; and
   second tilting means capable of changing an angle β defined between an optical axis of light directed toward the light receiving surface from the flat extraction mirror and a perpendicular line to the light receiving surface.
(2) The observation device as set forth in the (1), including:
   control means that controls the first tilting means and the second tilting means,
   the control unit controlling the first tilting means and the second tilting means so that the angle α and the angle β are equal to each other.
(3) The observation device as set forth in the (1) or (2), wherein
   the first tilting means is capable of changing the angle α within a range of 0° to 70°, and
   the second tilting means is capable of changing the angle β within a range of 0° to 70°.
(4) The observation device as set forth in any one of the (1) to (3), wherein the observation device is a microscope, a spectroscopic ellipsometer, a defect detection device, or a reflectance measurement device.

### Effects of the Invention

According to the invention, for example, it is possible to provide an observation device capable of observing, for example, a subject plane of about 24.6 x 24.6 mm with a resolution of 10 microns or less and a large tilt angle exceeding 45°. It is also possible to provide an observation device that does not limit the wavelength of light used for observing the subject plane.

### BRIEF DESCRIPTION OF DRAWINGS

FIG. 1 provides a front view, a top view, and a side view of an observation device with an X axis as a rotation axis;
FIG. 2 provides a front view, a top view, and a side view of the observation device with a Y axis as a rotation axis;
FIG. 3 is a top view of the observation device rotated by 0° about the X axis;
FIG. 4 is a side view of the observation device rotated by 0° about the X axis;
FIG. 5 is a front view of the observation device rotated by 0° about the X axis;
FIG. 6 is a front view of the observation device rotated by 30° about the X axis;
FIG. 7 is a front view of the observation device rotated by 60° about the X axis;
FIG. 8 is a front view of the observation device rotated by -60° about the X axis;
FIG. 9 is a top view of the observation device rotated by 0° about the Y axis;
FIG. 10 is a side view of the observation device rotated by 0° about the Y axis;
FIG. 11 is a front view of the observation device rotated by 0° about the Y axis;
FIG. 12 is a front view of the observation device rotated by 30° about the Y axis;
FIG. 13 is a front view of the observation device rotated by 60° about the Y axis;
FIG. 14 is a front view of the observation device rotated by -30° about the Y axis;
FIG. 15 is a front view showing the more specific appearance of the observation device;
FIG. 16 is a front view of the observation device rotated by -45° about the Y axis;
FIG. 17 is a side view of the observation device;
FIG. 18 shows the result of calculating the resolution (MTF) for the observation device rotated by 0° about the X axis;
FIG. 19 shows the result of calculating the resolution (MTF) for the observation device rotated by ±30° about the X axis;
FIG. 20 shows the result of calculating the resolution (MTF) for the observation device rotated by ±60° about the X axis;
FIG. 21 shows the result of calculating the resolution (MTF) for the observation device rotated by 0° about the Y axis;
FIG. 22 shows the result of calculating the resolution (MTF) for the observation device rotated by ±30° about the Y axis; and
FIG. 23 shows the result of calculating the resolution (MTF) for the observation device rotated by ±60° about the Y axis.

### MODE FOR CARRYING OUT THE INVENTION

The following describes an embodiment of the invention in detail with reference to the drawings.

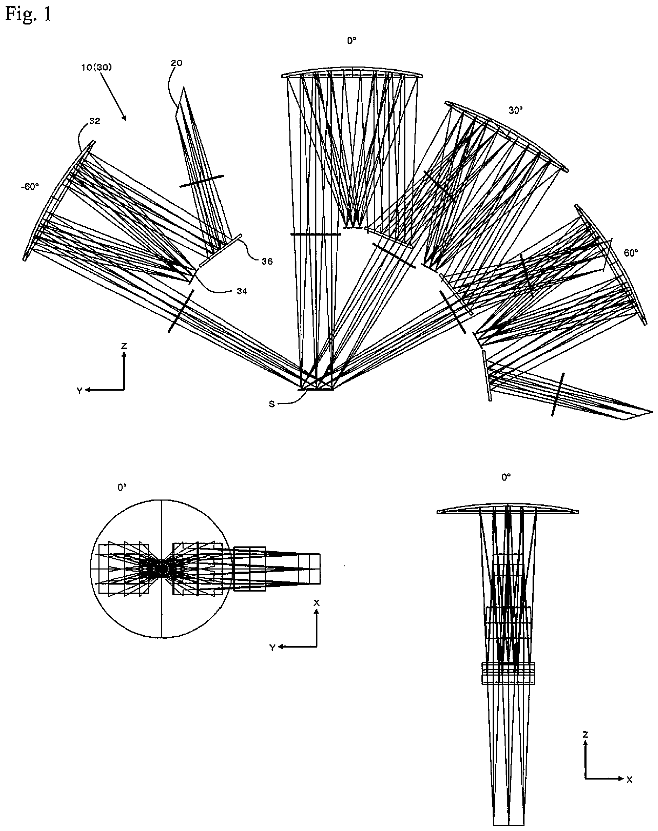

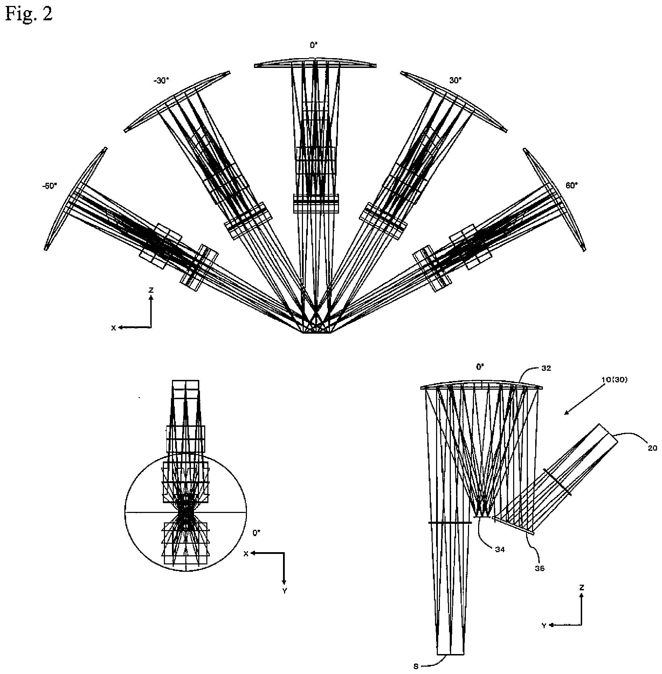

FIG. 1 provides a front view, a top view, and a side view of an observation device with an X axis as a rotation axis. FIG. 2 provides a front view, a top view, and a side view of the observation device with a Y axis as a rotation axis.

As shown in FIGS. 1 and 2, an observation device 10 of the embodiment includes a light receiving surface 20 for receiving light from a subject plane S, and an imaging optical system 30 for forming an image of light from the subject plane S on the light receiving surface 20.

In the observation device 10 of the present embodiment, the imaging optical system 30 is constituted by an Ofner optical system which is one of the equimagnification reflection type imaging optical systems. The imaging optical system 30 is constituted by a telecentric optical system.

The observation device 10 of the embodiment may include an illumination optical system (not shown) for irradiating the subject plane S with light. The illumination optical system may include a telecentric optical system in accordance with the imaging optical system 30. For example, the Kohler illumination system disclosed in Japanese Patent Application Laid-open No. 2013-174844 is available as the illumination optical system.

As shown in FIGS. 1 and 2, the imaging optical system 30 constituted by the Ofner optical system is provided with a primary mirror 32 constituted by a concave mirror, a secondary mirror 34 constituted by a convex mirror, and a flat extraction mirror 36 there. A beam of light from the subject plane S is reflected at the primary mirror 32, the secondary mirror 34, the primary mirror 32, and the extraction plane mirror 36 in the named order, and is then focused on the light receiving surface 20.

The subject plane S and the light receiving plane 20 are in a conjugate relationship of equimagnification in the Ofner optical system.

The subject plane S is the surface of a subject to be observed, for example, the surface of a printed circuit board.

The light receiving surface 20 is a surface on which light from the subject plane S forms an image, and is, for example, the light receiving surface of an image pickup device such as a two-dimensional CCD.

The secondary mirror 34 serves as the pupil of the optical system.

In addition, a commonly used CCD incorporates a condenser lens called a micro lens, and a color filter having a thickness on the front face of each element in order to increase the light receiving efficiency. Since the luminous flux having a large inclination does not reach the light receiving surface of the CCD, however, it is difficult for the micro lens to condense light. Therefore, it is preferable that the two-dimensional CCD to be used for the light receiving surface 20 is of a type that does not incorporate micro lenses or thick color filters.

As shown in FIGS. 1 and 2, the beam of light directed from the subject plane S toward the concave primary mirror 32 is telecentric. The light reflected by the primary mirror 32 is reflected at the convex secondary mirror 34 serving also as a diaphragm. The light reflected at the secondary mirror 34 is again reflected at the concave primary mirror 32 to be telecentric. The light that is reflected at the primary mirror 32 to be telecentric is reflected at the flat extraction mirror 36 to form an image on the light receiving surface 20 by an equimagnification.

The field of view of the subject plane S is, for example, 24.6 x 24.6 mm with NA = 0.04.

The field of view of the light receiving surface 20 on which the image of the light from the subject plane S is formed by an equimagnification is, for example, 24.6 x 24.6 mm with NA = 0.04.

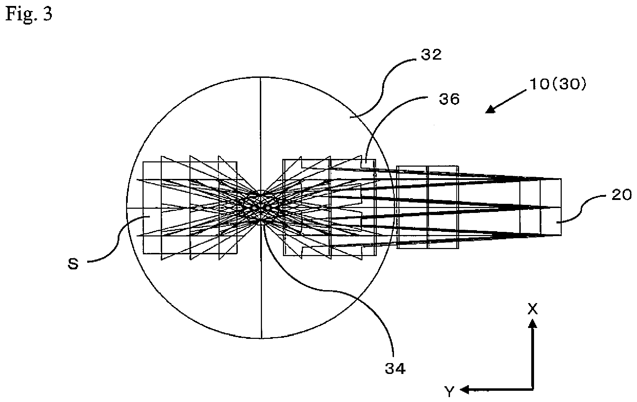

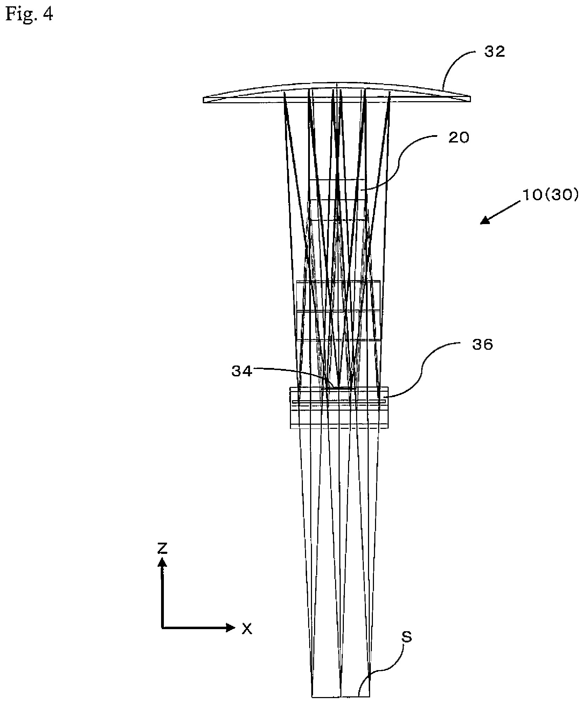

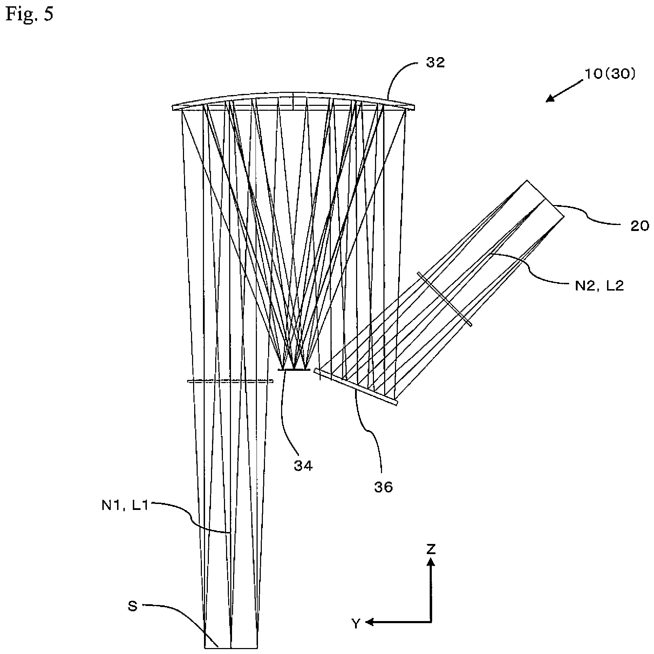

FIG. 3 is a top view of the observation device 10 rotated by 0° about the X axis. FIG. 4 is a side view of the observation device 10 rotated by 0° about the X axis. FIG. 5 is a front view of the observation device 10 rotated by 0° about the X axis.

As shown in FIG. 5, with the observation device 10 rotated by 0° about the X axis, a perpendicular line N1 to the subject plane S in the YZ plane is tilted by 0° with respect to an optical axis L1 of light traveling from the subject plane S toward the primary mirror 32 (α = 0°). A perpendicular line N2 to the light receiving surface 20 is tilted by 0° with respect to an optical axis L2 of light traveling from the flat extraction mirror 36 toward the light receiving surface 20 (β = 0°).

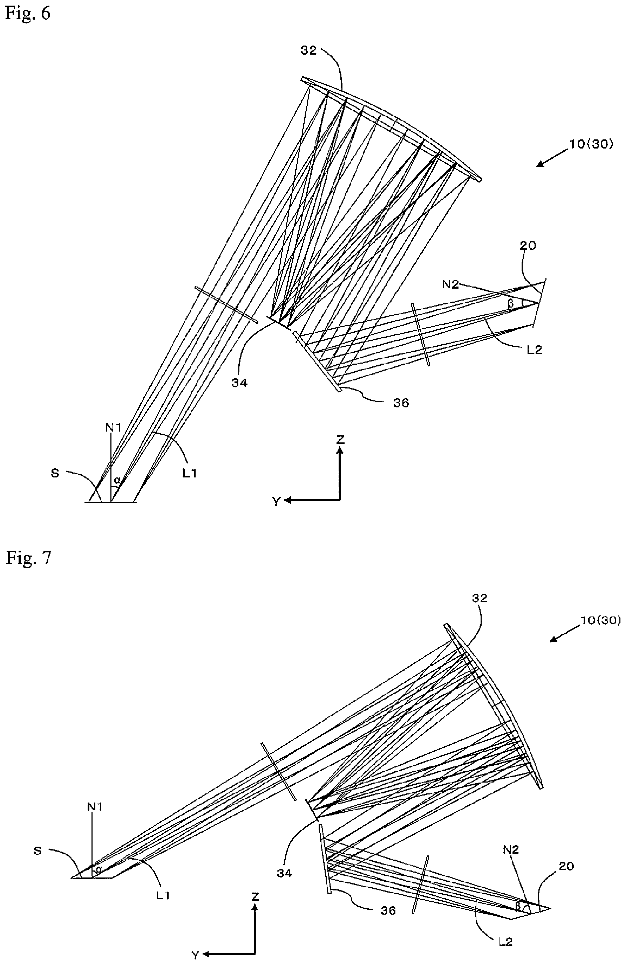

FIG. 6 is a front view of the observation device 10 rotated by 30° about the X axis.

As shown in FIG. 6, with the observation device 10 rotated by 30° about the X axis, the perpendicular line N1 to the subject plane S in the YZ plane is tilted by 30° with respect to the optical axis L1 of the light traveling from the subject plane S toward the primary mirror 32 (α = 30°). The perpendicular line N2 to the light receiving surface 20 is tilted by 30° with respect to the optical axis L2 of the light traveling from the extraction plane mirror 36 toward the light receiving surface 20 (β = 30°).

FIG. 7 is a front view of the observation device 10 rotated by 60° about the X axis.

As shown in FIG. 7, with the observation device 10 rotated by 60° about the X axis, the perpendicular line N1 to the subject plane S in the YZ plane is tilted by 60° with respect to the optical axis L1 of the light traveling from the subject plane S toward the primary mirror 32 (α = 60°). The perpendicular line N2 to the light receiving surface 20 is tilted by 60° with respect to the optical axis L2 of the light traveling from the flat extraction mirror 36 toward the light receiving surface 20 (β = 60°).

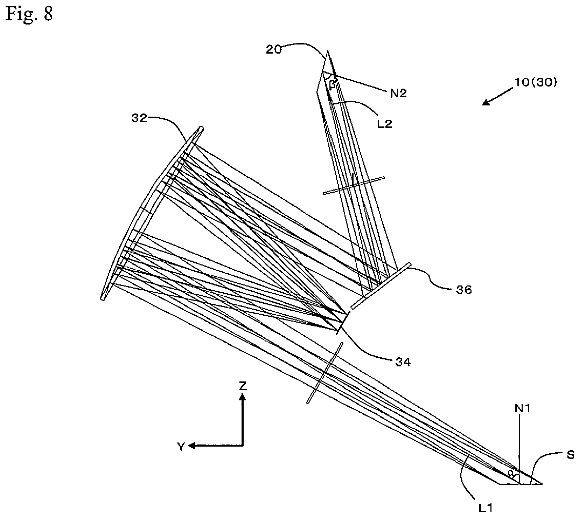

FIG. 8 is a front view of the observation device 10 rotated by -60° about the X axis.

As shown in FIG. 8, with the observation device 10 rotated by -60° about the X axis, the perpendicular line N1 to the subject plane S in the YZ plane is tilted by -60° with respect to the optical axis L1 of the light traveling from the subject plane S toward the primary mirror 32 (α = -60°). The perpendicular line N2 to the light receiving surface 20 is tilted by -60° with respect to the optical axis L2 of the light traveling from the flat extraction mirror 36 toward the light receiving surface 20 (β = -60°).

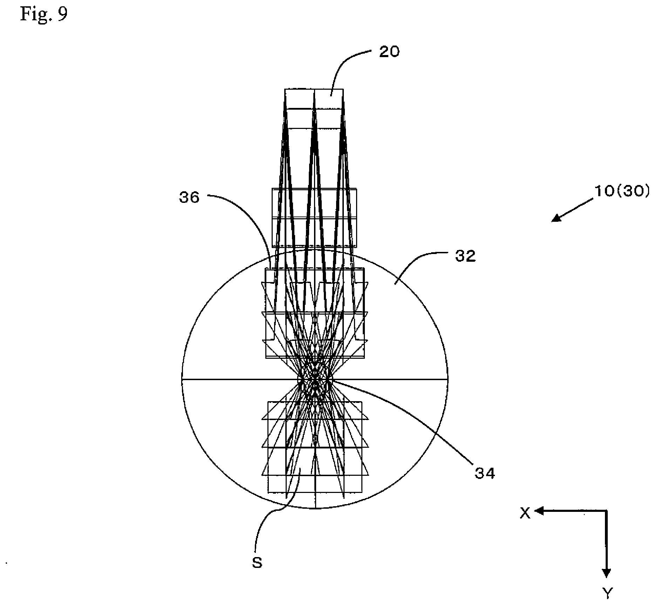

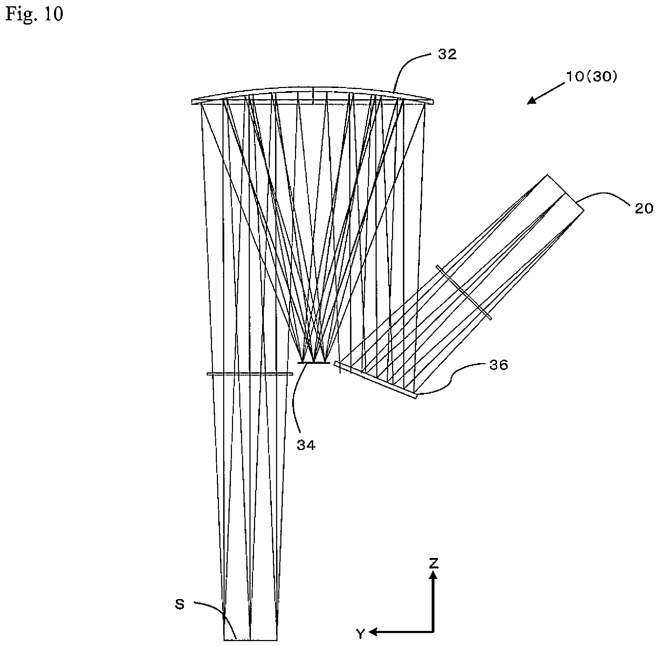

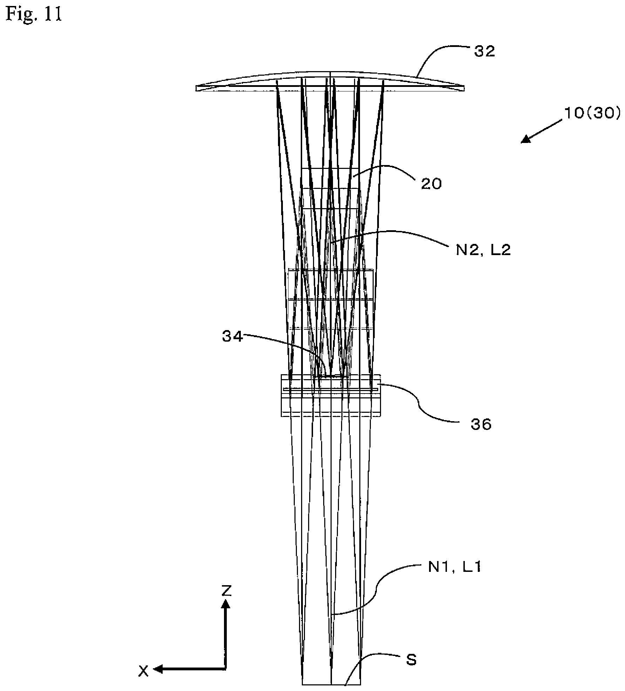

FIG. 9 is a top view of the observation device 10 rotated by 0° about the Y axis. FIG. 10 is a side view of the observation device 10 rotated by 0° about the Y axis. FIG. 11 is a front view of the observation device 10 rotated by 0° about the Y axis.

As shown in FIG. 11, with the observation device 10 rotated by 0° about the Y axis, the perpendicular line N1 to the subject plane S in the XZ plane is tilted by 0° with respect to the optical axis L1 of the light traveling from the subject plane S toward the primary mirror 32 (α = 0°). The perpendicular line N2 to the light receiving surface 20 is tilted by 0° with respect to the optical axis L2 of the light traveling from the flat extraction mirror 36 toward the light receiving surface 20 (β = 0°).

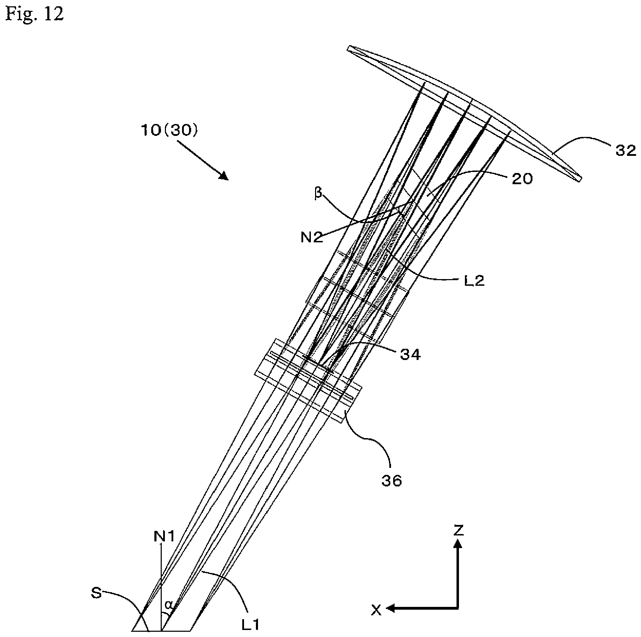

FIG. 12 is a front view of the observation device 10 rotated by 30° about the Y axis.

As shown in FIG. 12, with the observation device 10 rotated by 30° about the Y axis, the perpendicular line N1 to the subject plane S in the XZ plane is tilted by 30° with respect to the optical axis L1 of the light traveling from the subject plane S toward the primary mirror 32 (α = 30°). The perpendicular line N2 to the light receiving surface 20 is tilted by 30° with respect to the optical axis L2 of the light traveling from the extraction plane mirror 36 toward the light receiving surface 20 (β = 30°).

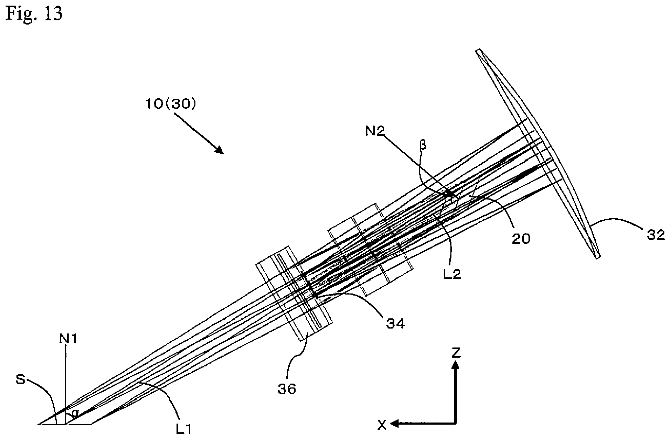

FIG. 13 is a front view of the observation device 10 rotated by 60° about the Y axis.

As shown in FIG. 13, with the observation device 10 rotated by 60° about the Y axis, the perpendicular line N1 to the subject plane S in the XZ plane is tilted by 60° with respect to the optical axis L1 of the light traveling from the subject plane S toward the primary mirror 32 (α = 60°). The perpendicular line N2 to the light receiving surface 20 is tilted by 60° with respect to the optical axis L2 of the light traveling from the flat extraction mirror 36 toward the light receiving surface 20 (β = 60°).

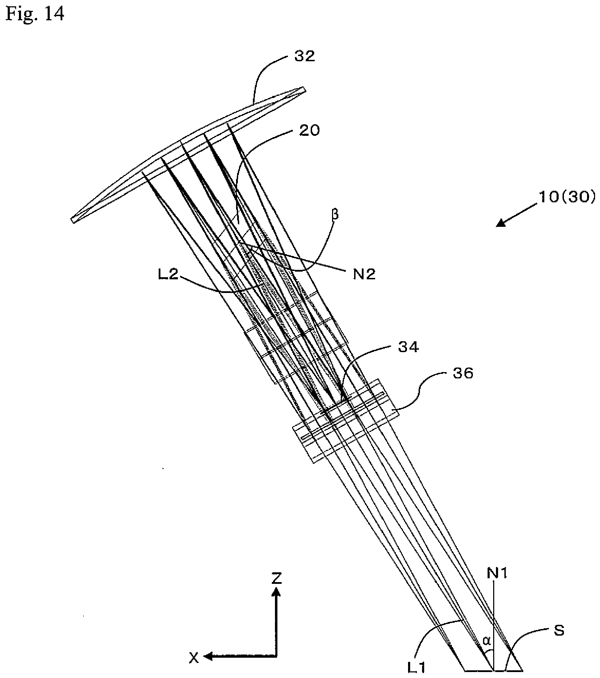

FIG. 14 is a front view of the observation device 10 rotated by -30° about the Y axis.

As shown in FIG. 14, with the observation device 10 rotated by -30° about the Y axis, the perpendicular line N1 to the subject plane S in the XZ plane is tilted by -30° with respect to the optical axis L1 (α = -30°) of the light traveling from the subject plane S toward the primary mirror 32. The perpendicular line N2 to the light receiving surface 20 is tilted by -30° with respect to the optical axis L2 of the light traveling from the flat extraction mirror 36 to the light receiving surface 20 (β = -30°).

As described above, the observation device 10 of the embodiment can rotate about both the X axis and the Y axis. That is, when the subject plane S to be observed is positioned in the two-dimensional XY plane, the lens barrel body for accommodating the primary mirror 32, the secondary mirror 34, and the extraction plane mirror 36 can be rotated about both the X axis and the Y axis. Further, it is possible to freely rotate the light receiving surface 20 including, for example, a CCD image pickup device according to the rotation angle of the lens barrel body. Accordingly, it is possible to rotate the barrel main body of the observation device 10 and the light receiving surface 20 so that the subject plane S and the light receiving surface 20 satisfy the Scheimpflug conditions. As a result, it is possible to focus on the entire subject plane S even when the subject plane S is observed obliquely.

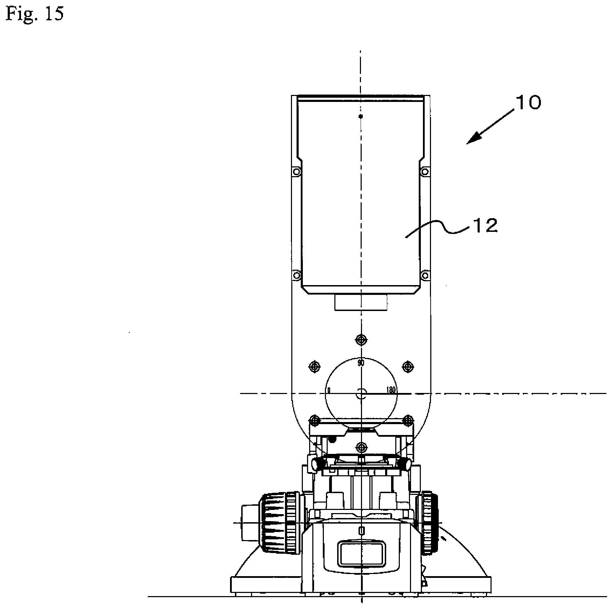

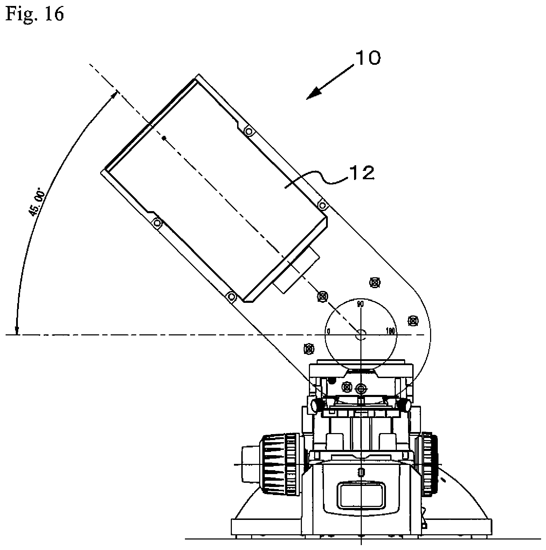

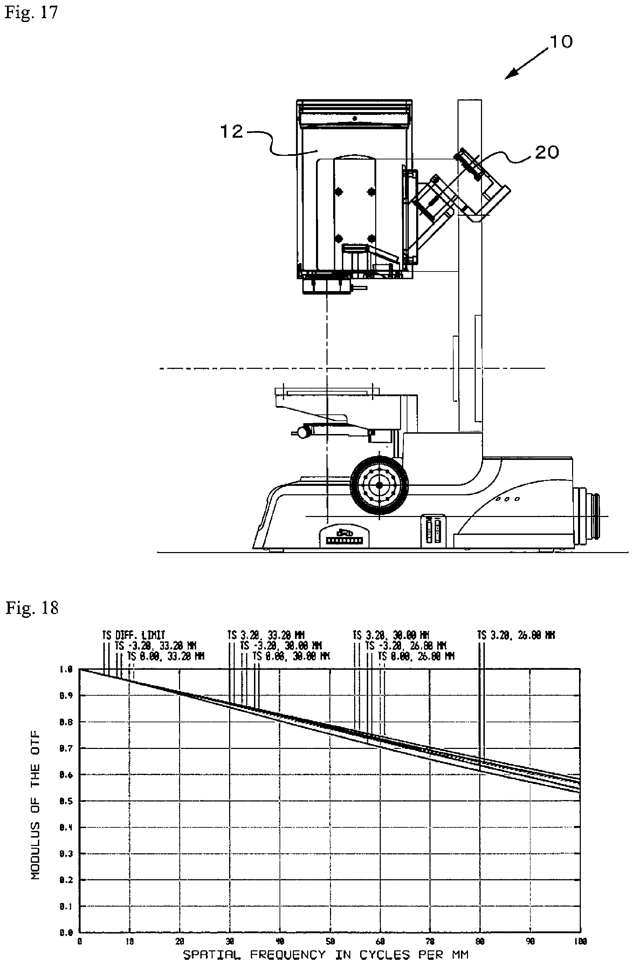

FIG. 15 is a front view showing the more specific appearance of the observation device 10. FIG. 17 is a side view of the observation device 10. FIG. 16 is a front view of the observation device 10 rotated by -45° about the Y axis.

As shown in FIGS. 15 to 17, the observation device 10 includes a lens barrel body 12 that integrally accommodates the primary mirror 32, the secondary mirror 34, and the flat extraction mirror 36 therein. In addition, the observation device 10 is provided with means for rotating the lens barrel body 12 about the X axis and the Y axis. This driving means is constituted by, for example, a stepping motor or a servo motor. The means for rotating the barrel main body 12 is not particularly limited, and may be other than the stepping motor or the servo motor. The means for rotating the barrel main body 12 corresponds to the "first tilting means" of the invention.

The observation device 10 includes means for rotating the light receiving surface 20 constituted by, for example, a CCD image pickup device. This driving means is constituted by, for example, a stepping motor or a servomotor. The means for rotating the light receiving surface 20 is not particularly limited, and may be other than the stepping motor or the servo motor. The means for rotating the light receiving surface 20 corresponds to the "second tilting means" of the invention.

Further, the observation device 10 includes control means for controlling the means (first tilting means) for rotating the lens barrel body 12 and the means (second tilting means) for rotating the light receiving surface 20, respectively. The control means can control the rotation angle of the lens barrel body 12 and the light receiving surface 20 by controlling the first tilting means and the second tilting means, respectively. This control means is constituted by, for example, a personal computer. The first tilting means and the control means are electrically connected together. The second tilting means and the control means are electrically connected together. Software for controlling the first tilting means and the second control means is preferably installed in the control means.

By rotating the lens barrel body 12, the first tilting means can change the angle α defined by the optical axis L1 of light traveling from the subject plane S toward the concave primary mirror 32 and the perpendicular line N1 to the subject plane S. The first tilting means is preferably capable of changing the angle α in the range of 0° to 70°.

By rotating the light receiving surface 20, the second tilting means can change the angle β defined by the optical axis L2 of the light traveling from the extraction plane mirror 36 toward the light receiving surface 20 and the perpendicular line N2 to the light receiving surface 20. The second tilting means is preferably capable of changing the angle β in the range of 0° to 70°.

The control means can individually control the first tilting means and the second tilting means so that the angle α and the angle β are equal to each other. In other words, the tilt angle of the subject plane S and the light receiving surface 20 with respect to the optical axis can be controlled so that the subject plane S and the light receiving surface 20 satisfy the Scheimpflug conditions. This makes it possible to focus on the entire subject plane S even when the subject plane S is observed from a direction tilted by, for example, 60°.

As described above, the imaging optical system for forming an image of light from the subject plane S on the light receiving surface 20 is constituted by an Ofner optical system which is one of the equimagnification reflective imaging optical systems. Such a reflective optical system has an advantage over a refractive lens such that the wavelength of light to be used to observe the subject plane S is not limited. Therefore, the observation device 10 of the embodiment may be applied to various fields such as semiconductor field and bio field since the wavelength of light used for observation is not limited.

The observation device 10 of the embodiment can be applied to, for example, a microscope for observing a subject plane.

The observation device 10 of the embodiment may be applied to, for example, a spectroscopic ellipsometer, a defect detection device, or a reflectance measurement device.

In addition to those devices, the observation device of the embodiment is potentially applicable to general optical observation devices.

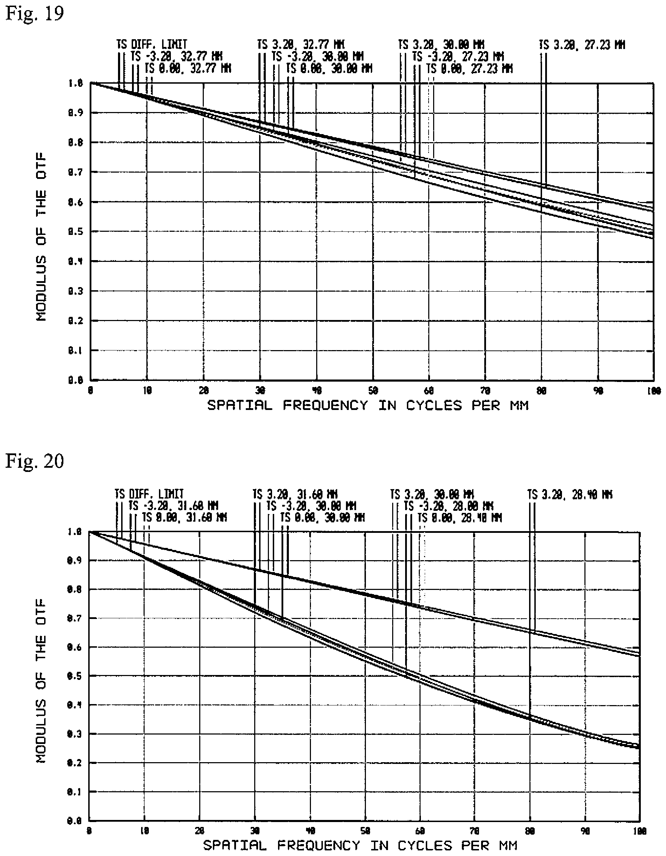

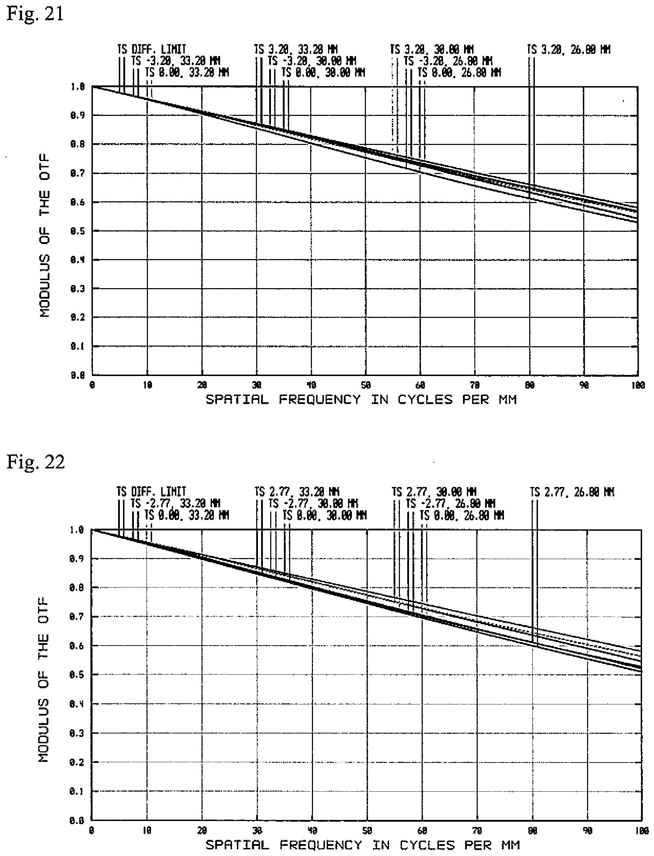

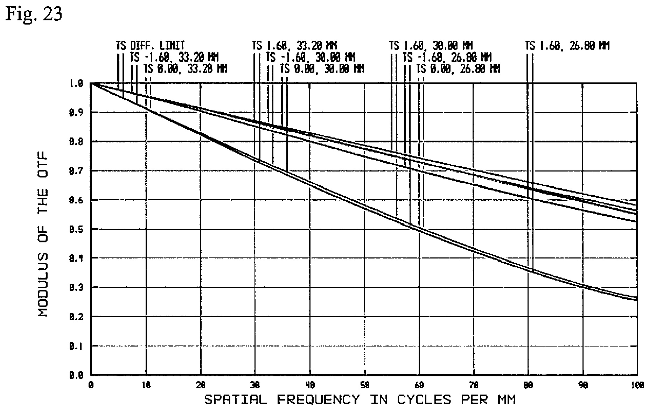

FIG. 18 shows the result of calculating the resolution (MTF) for the observation device of the embodiment rotated by 0° about the X axis. FIG. 19 shows the result of calculating the resolution (MTF) for the observation device of the embodiment rotated by ±30° about the X axis. FIG. 20 shows the result of calculating the resolution (MTF) for the observation device of the embodiment rotated by ±60° about the X axis. FIG. 21 shows the result of calculating the resolution (MTF) for the observation device of the embodiment rotated by 0° about the Y axis. FIG. 22 shows the result of calculating the resolution (MTF) for the observation device of the embodiment rotated by ±30° about the Y axis. FIG. 23 shows the result of calculating the resolution (MTF) for the observation device according to the embodiment rotated by ±60° about the Y axis. The resolution (MTF) was calculated in the wavelength range from 250 nm (Weight 1.0) to 800 nm (Weight 1.0) with the dominant wavelength being 550 nm (Weight 1.0). In addition, the resolution (MTF) was calculated up to 100 LP/mm (5 µm L&S).

When the observation device is perpendicular to the XY plane (the rotation angles about the X axis and the Y axis = 0°), the subject plane and the light receiving plane are symmetrical (axisymmetric) with respect to the Y axis within the XY projection plane, and are asymmetric with respect to the X axis. In this case, as shown in FIGS. 18 and 21, the MTFs at the center of the light receiving surface and the four corners substantially match the theoretical values.

When the observation device is rotated by ±30° and ±60° about the X axis, the subject plane and the light receiving plane are symmetric (line symmetric) with respect to the Y axis within the XY projection plane, and are asymmetric with respect to the X axis. In this case, as shown in FIGS. 19 and 20, the MTFs in the X direction of the light receiving surface are hardly changed from the case of the rotation angle = 0°. The MTFs in the Y direction of the light receiving surface are lower by cos30° = 0.866 for the rotation angle of 30° and by cos60° = 0.5 for the rotation angle of 60°, and substantially match the theoretical values.

When the observation device is rotated by ±30° and ±60° about the Y axis, the subject plane and the light receiving plane are asymmetric with respect to both the X axis and the Y axis in the XY projection plane. In this case, as shown in FIGS. 22 and 23, the MTFs in the X direction of the light receiving surface are hardly changed from the case of the rotation angle = 0°. The MTFs in the Y direction of the light receiving surface are lower by cos30° = 0.866 for the rotation angle of 30° and by cos60° = 0.5 for the rotation angle of 60°, and substantially match the theoretical values.

As shown in FIG. 1, when the observation device is rotated about the X axis within the YZ plane, the observation device of the embodiment may substantially achieve the theoretical resolution. Further, as shown in FIG. 2, even when the observation device is rotated about the Y axis in the XZ plane, the observation device of the embodiment may substantially achieve the theoretical resolution.

There may be a case where with the subject plane being placed on the XY plane, the observation device shown in FIG. 1 placed in the Z-axial direction perpendicular to the subject plane can be tilted in the X-axial direction.

There may also be a case where with the subject plane being placed on the XY plane, the observation device shown in FIG. 2 placed in the Z-axial direction perpendicular to the subject plane can be tilted in the Y-axial direction.

The observation device of the embodiment may observe the subject plane from substantially all the directions.

The observation device of the embodiment may substantially achieve the theoretical resolution even when the subject plane is observed from an oblique direction.

Generally, the subject plane of a microscope on which a sample is placed moves in the X and Y directions. The objective lens that needs focusing moves in the Z-axial direction perpendicular to the subject plane. That is, the microscope has three drive shafts.

The observation device according to the embodiment further includes a drive shaft for rotating the observation device about the X axis and a drive shaft for rotating the observation device about the Y axis. That is, the observation device of the embodiment may have five drive shafts. In this case, the observation device of the embodiment may be implemented by incorporating a 5-axis robot. Description of Reference Numerals

### 10 Observation device

- 12: Lens barrel body
- 20: Light receiving surface
- 30: Image forming optical system
- 32: Primary mirror
- 34: Secondary mirror
- 36: Flat extraction mirror L1, L2 Optical axis N1, N2 Perpendicular line
- S: Subject plane

## Claims

1. An observation device comprising a light receiving surface that receives light from a subject plane, and an imaging optical system that forms an image of the light from the subject plane on the light receiving surface, wherein
the imaging optical system is constituted by an equimagnification reflective imaging optical system that includes a concave primary mirror, a convex secondary mirror, and a flat extraction mirror, and is capable of reflecting a beam of the light from the subject plane at the concave primary mirror, the convex secondary mirror, and the concave primary mirror in a named order, and then forming an image on the light receiving surface via the flat extraction mirror,
the observation device comprising:
first tilting means capable of changing an angle α defined between an optical axis of light directed toward the concave primary mirror from the subject plane and a perpendicular line to the subject plane; and
second tilting means capable of changing an angle β defined between an optical axis of light directed toward the light receiving surface from the flat extraction mirror and a perpendicular line to the light receiving surface.

2. The observation device according to claim 1, comprising:
control means that controls the first tilting means and the second tilting means,
the control means controlling the first tilting means and the second tilting means so that the angle α and the angle β are equal to each other.

3. The observation device according to claim 1 or 2, wherein
the first tilting means is capable of changing the angle α within a range of 0° to 70°, and
the second tilting means is capable of changing the angle β within a range of 0° to 70°.

4. The observation device according to any one of claims 1 to 3, wherein the observation device is a microscope, a spectroscopic ellipsometer, a defect detection device, or a reflectance measurement device.
